# EUROPEAN PATENT SPECIFICATION

(11) **EP 0 854 792 B1**
(45) Date of publication and mention of the grant of the patent: **04.08.1999**
(21) Application number: 96937593.0
(22) Date of filing: 25.10.1996
(51) Int. Cl.: B60B 23/00, B23K 20/12

(54) **TWO-PIECE WHEEL**
RAD IN ZWEI TEILEN
ROUE EN DEUX PARTIES

(30) Priority: 26.10.1995 NO 954273
(43) Date of publication of application: 29.07.1998
(73) Proprietor: NORSK HYDRO ASA, 0240 Oslo (NO)
(72) Inventor: AASEN, Einar, Johan, N-0390 OSLO (NO); MORLEY, Edward, James, DK-6520 Toftlund (DK); MIDLING, Ole, Terje, N-4262 Avaldsnes (NO); SANDVIK, Anders, N-5574 Skjold (NO)
(74) Representative: Bleukx, Lucas Lodewijk M.
(86) International application number: PCT/NO96/00254
(87) International publication number: WO 97/15462

(56) References cited:
- EP-A- 0 547 313
- WO-A-93/10935
- WO-A-95/26254

## Description

The present invention relates to light weight vehicle wheels and more particularly to vehicle wheels composed of two or more separately formed parts and a method for forming the same.

Today there are mainly three types of light metal wheels on the market:
- cast one piece
- forged one piece
- welded plate wheels

The forged and welded ones have the biggest potential for low weight because of use of wrought alloys having higher strength than casting alloys. However, casting gives a higher design freedom, without influencing the cost essentially.

The design freedom does not only give styling flexibility, but also makes it possible to give the centre part of the wheel a nearly optimal shape with respect to cornering strength which normally is the critical aspect for this part.

In the rim area, however, an alloy with high mechanical strength and good elongation is of main importance.

An optimal design of a wheel in order to obtain low weight and full styling freedom thus seems to be one where a cast centre part is joined to a rim of wrought alloy.

Such wheels are already on the market and have joints either comprising a bolted connection (being an expensive and non-low-weight solution) or a weld seam.

However, all hitherto known/disclosed welding methods for wheels are based on fusion welding (e.g. arc welding) or friction welding which requires joint preparation and post weld dressing steps, something which negatively influences the total manufacturing costs. Furthermore, several other negative/limiting aspects have been experienced, such as environment hazard connected to fusion welding, problems with dimensional stability both with fusion and friction welded wheels and limited design freedom with regard to the need for performing multiple parallel welds compared to conventional friction welding processes.

It is therefore an object of the present invention to provide a new and improved type of two-piece wheels avoiding the above drawbacks related to the presently applied joining methods.

Another object of the present invention is to provide a new method for joining of separately formed wheel parts offering the possibility to achieve high quality weld seams.

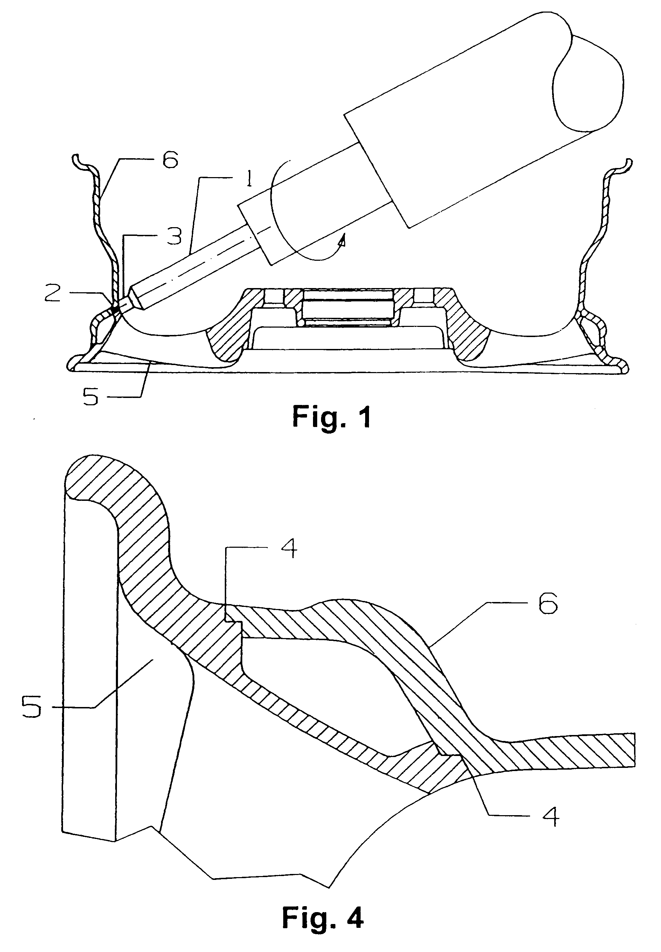

These and other objects and advantages of the present invention are met by provision of a new method of joining the separately formed wheel parts and a novel automotive light metal wheel as defined in the attached patent claims 1 and 5, respectively, and becomes apparent from the following detailed description of the preferred embodiment(s) when read in the light of the accompanying drawings, Figures 1-4, where
- Fig. 1: shows schematically in a plan view joining (welding) of the assembled two-piece vehicle wheel,
- Fig. 2: is a cross-sectional fractional vertical view of a vehicle wheel fabricated in accordance with the present invention,
- Fig. 3: shows in a cross-sectional fractional view a vehicle wheel exhibiting an alternative configuration of the weld seam and
- Fig. 4: is an enlarged view of a selected portion of Fig. 3 illustrating a weld joint geometry for joining the disc part to the rim part of the wheel.

Referring to the drawings, and particularly to Fig. 1, the principle of joining separately provided rim part 6 and centre part 5 of a vehicle wheel by means of a rotating tool 1 is shown schematically to illustrate application of the friction stir welding process according to the present invention.

The recently developed friction stir welding process, as disclosed in WO93/10935, joins workpieces by plasticising and then consolidating the material about their joint line. The welding is achieved by means of a rotating tool 1 comprising a pin 2 and a shoulder part 3, where the pin is inserted at the start of the joint line 4 and moved forward in the direction of the welding. When the pin is rotated, it friction heats annular regions of the pre-assembled workpieces rapidly producing a shaft of plasticised metal around the pin. As the pin is moved forward, the pressure provided by the leading face of the shoulder part 3 forces plasticised material behind the pin where it consolidates and cools. Thus no heat is generated due to a relative motion between the workpieces to be joined.

The pre-assembled wheel parts 5,6 can advantageously rotate during the welding process around their vertical axis of symmetry, while the rotor tool 1 remains stationary as indicated in the figure. In this way more than one weld seam can be achieved simultaneously using a double set of friction stir welding rotor tools.

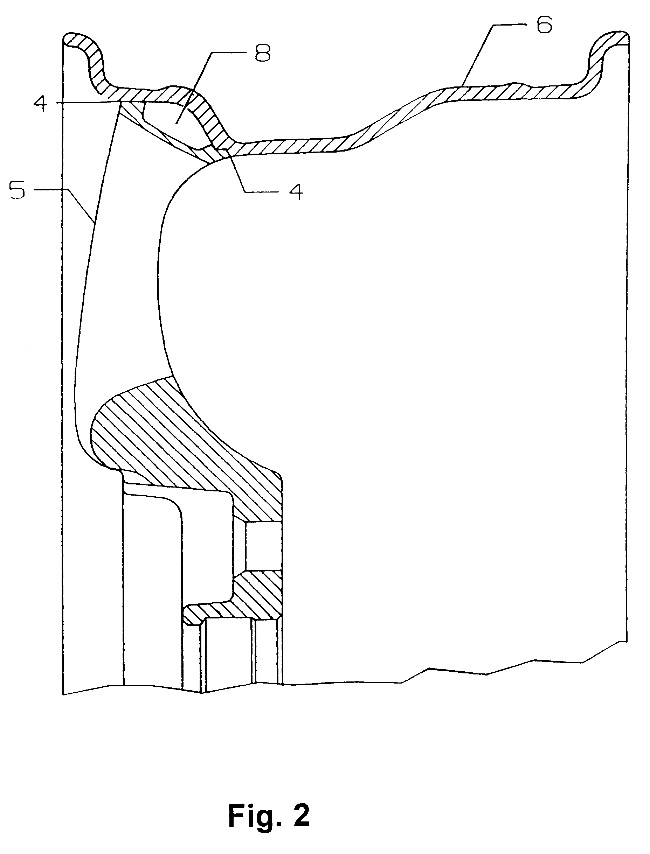

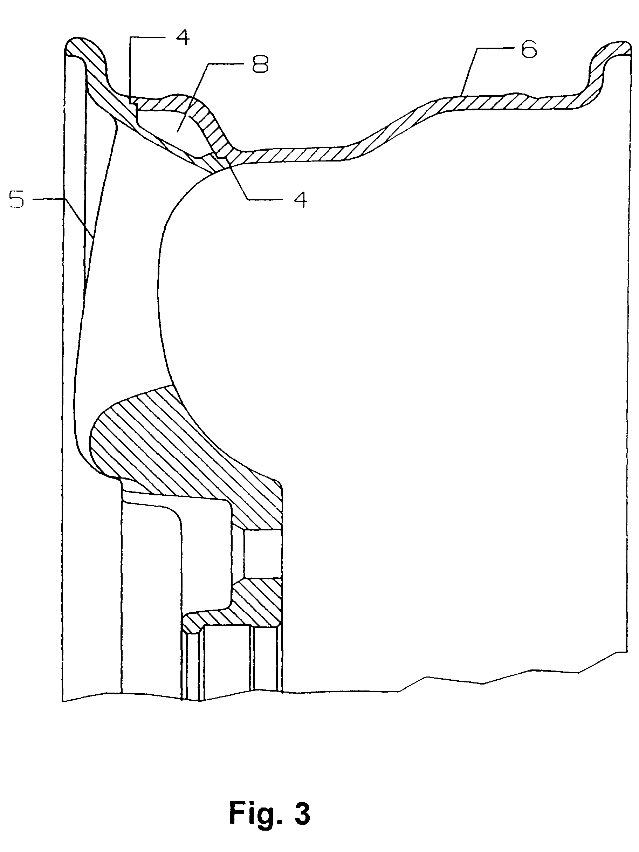

Special advantages resulting from application of the friction stir welding process for joining of separately made vehicle wheel parts according to the present invention are more apparent from Fig. 2 and Fig. 3 which show an optional choice of lap or butt weld seams joining a cast or forged outer flange to the centre part.

The possibility of providing two or more non-parallel seams between the disc part and the rim part results in superior design and wheel performance characteristics compared to the conventional friction welded two-piece wheel.

Provision of "branched" circumferential connection between the disc and the rim ensures a favourable load transfer through the two weld seams in a particularly stressed area of the wheel. Simultaneously an optimal configuration of the disc part is achieved exhibiting a cavity (pocket) 8 at the disc periphery, thus ensuring material and weight savings.

Fig. 4 illustrates in detail a weld joint geometry incorporating a support function for the rim part under the assembling and welding operation. Such joint design considerably facilitates the requirements for fixation means/procedures prior to the welding operation.

Welding tests have demonstrated provision of weld seams exhibiting good mechanical properties with low grade of distortion due to the low heat generation during welding, conducted at approximately 500°C.

Fine grain structures are obtained on all tempers of aluminium alloys whether provided as cast, rolled or extruded parts. Thus, e.g. by welding in solution treated (T4) condition of AlMgSi1 parts followed by artificial ageing (T6 treatment) high uniformity of mechanical properties across the welds maintaining 90% of the original strength in the heat affected zone were achieved, something being unattainable by conventional competitive welding techniques.

The possibility to combine wheel parts made of casting alloys (e.g. AlSi11,AlSi7Mg) with parts of wrought aluminium alloys of 6000 and 7000 series is another advantageous feature of applying the friction stir welding process according to the present invention.

According to a preferred embodiment a two-piece wheel can be provided combining a centre part and a rim based on a centrifugally cast tube of wrought aluminum alloy which is subjected to plastic working (roll or spin forming) to the desired configuration of the rim profile prior to the weld joining of the parts. In this way an optimal combination of material characteristics is achieved, thus reducing the danger of cracking during the plastic working of the rim.

Further benefits and advantages resulting from applying friction stir welding in manufacturing of two-piece wheels are as follows:
- no special preparation of the to-be welded surfaces is required and there is a possibility to weld prefinished parts which have been surface treated (powder coated or anodised),
- welds have good surface appearance and require no or limited post welding machining or dressing operations,
- the process is energy efficient and can be performed on inexpensive equipment,
- good dimensional tolerances (run out) due to a low distortion,
- no filler material, special operative skill or shielding atmosphere is required,
- there is no loss of alloying elements from weld microstructure compared to fusion welding techniques and fine grained seam indicates maintenance of wear base material fatigue properties,
- and finally it is an environmentally friendly non-polluting process of manufacturing vehicle wheels.

Other than the above by way of examples disclosed configurations of wheel parts and weld joints can be applied within the frame of the present invention. Thus, e.g. the centre part may be provided as a forged part of a wrought Al-alloy or a centre part of spider type comprising a multiplicity of hollow spokes instead of the illustrated full face centre part.

## Claims

1. Method of manufacturing automotive light metal two-piece wheel comprising a wheel centre part and a rim part interconnected by at least one circumferential weld joint,
**characterized in that**
the weld-joint is a solid-phase weld seam provided by friction stir welding exhibiting fine grained structure seam and minimal heat affected zone along the weld seam.

2. Method according to claim 1,
**characterized in that**
the weld seam is formed between a centre part of cast alloy and a rim of wrought alloy.

3. Method wheel according to claim 2,
**characterized in that**
the wrought rim of the wheel is based on a centrifugally cast tube being roll- or spin-formed into the final rim configuration.

4. Method according to any preceding claim,
**characterized in that**
both parts of the wheel are made of wrought Al-alloy.

5. Automotive light metal two-piece wheel comprising a wheel centre part (5) and a rim part interconnected by two or more circumferential weld joints,
**characterized in that**
the joint welds are non (surface) parallel weld seams.

6. Automotive light metal two-piece wheel according to claim 5,
**characterized in that**
the centre part (5) is casted and provided with an outer flange of wroght alloy, the flange being an integral part of the rim (6).

## Patentansprüche

1. Verfahren zur Herstellung eines leichten metallischen Fahrzeugrades in zwei Teilen, welches einen zentralen Radteil und einen Felgenteil umfaßt, die an dem Umfang mit Hilfe von wenigstens einem Schweißstoß der eine mit dem anderen verbunden sind,
dadurch gekennzeichnet, daß
der Schweißstoß aus einer Feststoff-Phasen-Schweißnaht besteht, die durch ein Umlauf-Reibschweißen hergestellt worden ist und eine feinkörnige Nahtstruktur besitzt sowie eine minimale wärmebeeinflußte Zone entlang der Schweißnaht.

2. Verfahren gemäß Anspruch 1,
dadurch gekennzeichnet, daß
die Schweißnaht zwischen einem zentralen Teil aus einer gegossenen Legierung und einem Felgenteil aus einer geschmiedeten Legierung gebildet wird.

3. Verfahren gemäß Anspruch 2,
dadurch gekennzeichnet, daß
die geschmiedete Felge des Rades auf einem durch Schleuderguß hergestellten Rohr beruht, der durch Walzen oder Drehen in die endgültige Konfiguration der Felge umgeformt wird.

4. Verfahren gemäß irgendeinem der vorhergehenden Ansprüche,
dadurch gekennzeichnet, daß
die beiden Teile des Rades aus einer geschmiedeten Al-legierung hergestellt werden.

5. Leichtes metallisches Fahrzeugrad in zwei Teilen, welches einen zentralen Radteil (5) und einen Felgenteil umfaßt, die an dem Umfang mit Hilfe von zwei oder mehr Schweißnähten der eine mit dem anderen verbunden sind,
dadurch gekennzeichnet, daß
die Stoßschweißstellen aus nicht (Oberflächen) parallelen Schweißnähten bestehen.

6. Leichtes metallisches Fahrzeugrad in zwei Teilen gemäß Anspruch 5,
dadurch gekennzeichnet, daß
der zentrale Teil (5) gegossen ist und mit einem äußeren Flansch aus einer geschmiedeten Legierung versehen ist, wobei der Flansch einen integralen Teil der Felge (6) bildet.

## Revendications

1. Procédé de fabrication d'une roue métallique légère en deux parties pour automobile, comprenant une partie centrale de roue et une partie de jante reliées entre elles par au moins un joint soudé à la circonférence,
caractérisé en ce que
le joint soudé est une ligne de soudage en phase solide fournie par un soudage par friction à mouvement cyclique montrant un joint avec une structure à grain fin et une zone minimale affectée par la chaleur le long de la ligne de soudage.

2. Procédé suivant la revendication 1,
caractérisé en ce que
la ligne de soudage est formée entre une partie centrale en alliage obtenu par coulée et une jante en alliage corroyé.

3. Roue du procédé suivant la revendication 2,
caractérisée en ce que
la jante corroyée de la roue est basée sur un tube coulé par centrifugation, transformé par laminage ou par friction en la configuration de la jante final.

4. Procédé suivant l'une quelconque des revendications précédentes,
caractérisé en ce que
les deux parties de la roue sont constituées d'un alliage d'aluminium corroyé.

5. Roue métallique légère en deux parties pour automobile, comprenant une partie centrale de roue (5) et une partie de jante reliées entre elles par deux ou plusieurs joints soudés à la circonférence,
caractérisée en ce que
les soudures de joints sont plusieurs lignes de soudage non parallèles (à la surface).

6. Roue métallique légère en deux parties pour automobile suivant la revendication 5,
caractérisée en ce que
la partie centrale (5) est coulée et pourvue d'une bride extérieure en alliage corroyé, la bride faisant partie intégrante de la jante (6).
